# EUROPEAN PATENT SPECIFICATION

(11) **EP 1 619 569 B1**
(45) Date of publication and mention of the grant of the patent: **30.12.2009**
(21) Application number: 05105877.4
(22) Date of filing: 30.06.2005
(51) Int. Cl.: G05D 23/19, G05D 23/20, F24D 19/10

(54) **Method for modifying the operating mode of a thermostat**
Verfahren zur Modifizierung der Betriebsart eines Thermostats
Procédé de modification de mode de fonctionnement d'un thermostat

(30) Priority: 23.07.2004 IT VI20040182
(43) Date of publication of application: 25.01.2006
(73) Proprietor: Lacroix Electronique SRL, 31056 Roncade (TV) (IT)
(72) Inventor: Marchetti, Corrado, 31052 Varago di Maserada sul Piave (TV) (IT)
(74) Representative: Bonini, Ercole

(56) References cited:
- DE-A1- 4 118 966
- GB-A- 2 164 512
- US-A- 2 767 278
- US-A- 3 571 544
- US-A- 5 305 952
- US-A- 6 040 748
- US-B1- 6 375 038
- US-B1- 6 644 557

## Description

The invention concerns a method for modifying the operating mode of a thermostat particularly suited to be used to control the temperature of rooms and/or of electrical appliances such as, for example, radiators, heated towel rails and similar.

It is known that special thermostats are used for controlling the temperature of rooms or of electrical appliances such as, for example, radiators, heated towel rails and similar.

Each thermostat is provided with a control circuit and with regulation means, generally buttons or knobs, at the disposal of the operator, with which it is possible to regulate and control the temperature and in some cases also the operating mode.

As concerns in particular the "operating modes", the regulating knob or button is of the type with several positions, each of which corresponds to a different operating mode of the thermostat.

For example, the following may be contemplated:
- a first operating mode called "comfort mode", in which the actual temperature corresponds to the one set by the operator;
- a second operating mode called "automatic", in which the thermostat is controlled by a remote programming/control device;
- a third operating mode called "anti-freeze", in which the temperature, irrespective of the set temperature, never falls below a predetermined minimum value;
- a fourth operating mode called "economy", in which the actual operating temperature is lower than the set temperature by a predetermined value.

"Block" functions may also be provided, which prevent or enable the modification of some operating modes and which may comprise, for example:
- a "first block function", which prevents the modification of the thermostat operating mode, but not the modification of the temperature to be obtained;
- a "second block function", which prevents the modification of the thermostat operating mode and also of the temperature to be obtained.

Lastly, further block functions may be provided, which can be described as functions for "customising" the thermostat operation according to specific needs of the user, and which may comprise, for example:
- a first customising function called "setting" function, which allows the actual value of the temperature existing inside the room to be set on the thermostat;
- a second customising function, which allows the modification of the brightness of the signalling leds.

Besides those described, the thermostat may also include other functions of another type, different from those described.

However, the thermostats of the known type which allow the regulation of the operating modes described present some recognised drawbacks.

One recognised drawback is represented by the fact that, as has been said, to activate the different operating modes knobs or buttons are used, that is, mechanical operating parts which by their very nature complicate the construction of the thermostat, especially when the thermostat must control many operating modes.

Another drawback is represented by the fact that the presence of movable mechanical control parts makes the thermostat subject to breakages.

Another, and not the last, drawback of the thermostats of the known type is represented by the fact that the presence of the knobs and buttons makes it always easy to modify the operating modes, even in certain installations, such as hotels, communities or homes where there are children, and where therefore it would be advisable to allow such modifications of the operating modes to be carried out only by authorised persons.

Document US 6 644 557 B1 discloses a system allowing a user to access a thermostat temperature setting by means of a key.

Document US 5 305 952 A discloses a thermostat that a user can switch from a "vacant" mode to an "occupied" mode by inserting a key into a switch.

The present invention aims to overcome all the drawbacks mentioned above.

In particular a first aim of the invention is to carry out a thermostat that allows the operating modes to be controlled and modified using control means different from mechanical controls such as knobs or buttons.

Another aim of the invention is to carry out a thermostat that allows the management of a greater number of operating modes compared to the number of operating modes that can be managed by thermostats of the known type.

A further aim is that the thermostat of the invention presents a simpler execution than the known thermostats.

Another aim of the invention is that the modification of the operating modes, such as for example their temporary or permanent activation or inhibition, can be carried out more rapidly and safely than in thermostats of the known type.

A further, but not the last, aim is that the modification of the operating modes can be carried out only by authorised persons.

These aims are achieved by a method for modifying the operating mode of a thermostat according to the main claim.

According to the embodiment described herein, the magnetic switching means comprise a magnetic key which cooperates with a magnetic switch located inside the case and electrically connected to the microprocessor.

The modification of the operating mode is carried out by simply moving the magnetic key closer to and away from the magnetic switch, repeatedly and for a predetermined number of times, which varies according to the operating mode to be activated or to be inhibited.

In other embodiments of the invention the variation of the operating mode to be activated or to be inhibited may be carried out also by varying the time interval during which the magnetic key remains in a position close to the magnetic switch.

In further embodiments, the variation of the operating mode is carried out by keeping the magnetic key close to the magnetic switch and at the same time operating the regulating means at the disposal of the operator.

Advantageously, the thermostat of the invention has a simpler and more reliable operation than the known thermostats, since the modification of the operating modes is not carried out only with a simple manoeuvre of buttons and knobs.

Again advantageously, the use of the magnetic key allows access by non authorised persons to the most sensitive and least used controls, such as the operating modes, to be prevented.

Said aims and advantages will be highlighted in greater detail in the description of a preferred embodiment of the invention, which is given purely as an example without limitation, with reference to the enclosed drawings, in which:
- fig. 1 is an axonometric view of the thermostat of the invention;
- fig. 2 shows a variant of the thermostat of the invention;
- fig. 3 is a schematic view of the connections between elements of the thermostat and the microprocessor fitted on the electric circuit;
- fig. 4 shows a detail of the electric circuit and of the magnetic switching means fitted on the thermostat of the invention;
- fig. 5 shows an enlarged detail of fig. 4.

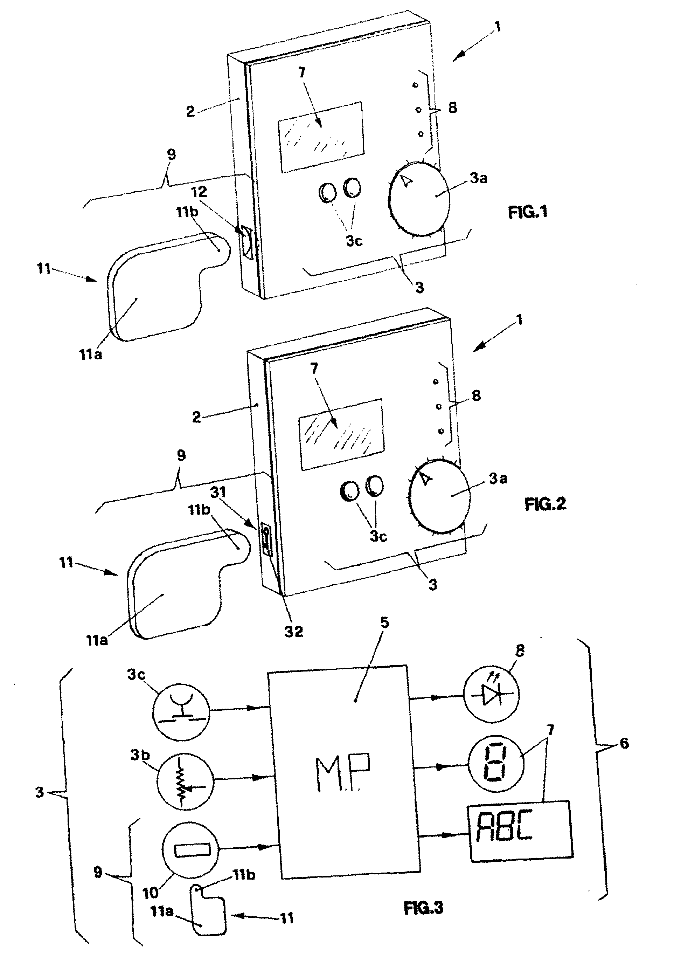

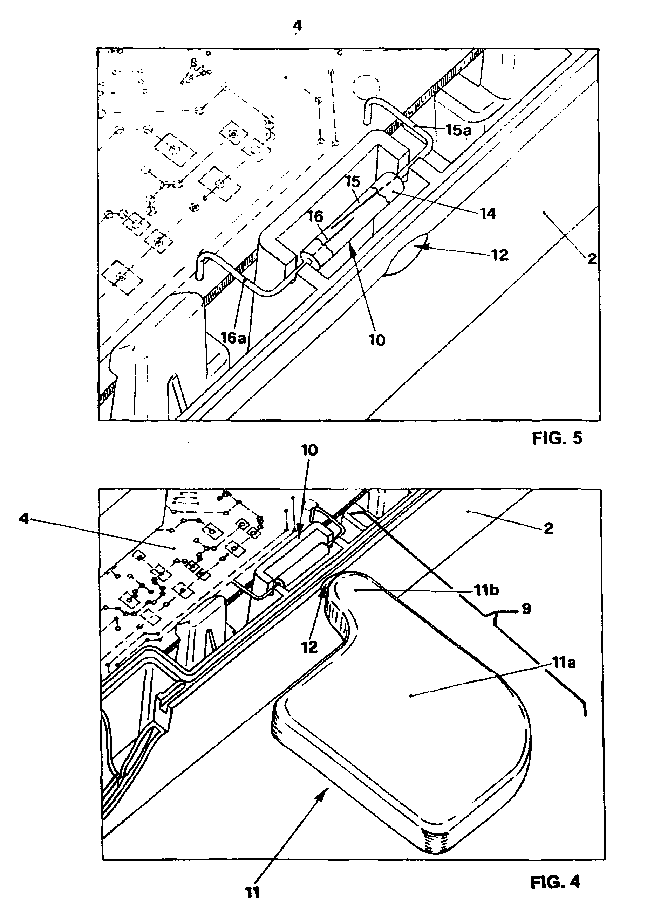

The description of the thermostat of the invention refers to the axonometric view shown in fig. 1, in which the thermostat is indicated as a whole by **1,** and also to the two partial views of the inside of the same thermostat, shown in figures 4 and 5.

It is important to point out that the thermostat of the invention may, however, also be constructed according to embodiments that are different from the one illustrated in the above-mentioned figures.

Therefore, with particular reference to the above-mentioned figures, it is possible to observe that the thermostat **1** of the invention comprises a case **2,** from which regulating means indicated as a whole by **3** to be placed at the disposal of the operator project outwards, said regulating means comprising a knob **3a** that controls a potentiometer, not represented, for regulating the temperature.

The potentiometer, indicated by **3b,** is schematically represented in fig. 3, where it is possible to observe that it is electrically connected to a microprocessor **5** which belongs to an electric circuit **4.**

One embodiment of the thermostat may require the presence in the case **2** of one or more buttons **3c,** schematically represented also in fig. 3, where they are connected to the microprocessor **5,** which the operator may use to modify the operating modes of the thermostat according to the procedures to be described below.

On the outside of the case **2** it is also possible to observe means for displaying the operating and regulating conditions of the thermostat, indicated as a whole by **6,** which comprise a digital display **7** and LEDs **8.**

The LEDs **8** and the digital display **7** may be one or more and they may also be reciprocally alternative, in the sense that the presence of the digital display may exclude the presence of the LEDs and vice versa.

According to the invention, the regulating means **3** also comprise magnetic means **9** for switching over the operating mode of the thermostat **1,** wherein said magnetic means are electrically connected to the electric circuit **4** with microprocessor **5** and can be operated by an operator.

In particular with reference to fig. 5, the magnetic switching means **9** comprise a magnetic switch indicated as a whole by **10** located inside the case **2** and electrically connected to the microprocessor **5,** and a magnetic key **11** that can be held by the operator and cooperates with the magnetic switch **10** when it is brought close to the latter from the outside of the case **2.**

For this purpose a reference mark on the case in correspondence with the magnetic switch **10** and consisting of a concave portion **12** provided in the body of the case **2** allows the insertion of a shaped projection **11b** present in the body **11a** of the magnetic key **11.**

Alternatively, according to the variant indicated by **30** which can be seen in fig. 2, the reference mark is constituted by an image **31** representing the drawing of a key **32.**

The whole body **11a** of the magnetic key **11** or only a part of it will be magnetic. Moreover, the magnetic key **11** may have any shape.

As far as the magnetic switch **10** is concerned, it comprises a bulb **14** housed in the case **2,** in which there is a pair of magnetic strips **15, 16** electrically connected to the microprocessor **5,** each by means of a respective lead **15a, 16a.**

Operatively, when the shaped projection **11b** of the magnetic key **11** is inserted in the concave portion **12** or brought close to the image **31,** the magnetic strips **15, 16** come in contact with each other and produce the electric continuity between the leads **15a, 16a.**

The microprocessor **5** thus receives an electric signal that modifies the operating mode of the thermostat.

The type of modification of the operating mode depends on the characteristics of the electric circuit **4** and of the microprocessor **5** and on the programming of the microprocessor itself, which, as may be seen in fig. 3, is also connected to the potentiometer **3b** associated with the temperature regulating knob **3a**, the display means **6** comprising the digital display **7** and/or the LEDs **8** and the buttons **3c.**

After the modification, the operating mode or modes activated or inhibited are shown by the digital display **7** and/or by the coming on or going out of the LEDs **8.**

Several methods are possible for modifying the thermostat operating mode.

According to a first method, the following series of operations must be performed one or more times:
- placing the magnetic key **11** in contact with the reference mark **12** or **31** present on the outside of the case **2;**
- keeping the magnetic key **11** in contact with the reference mark **12, 31** for a predetermined time, during which the electric contact between the magnetic strips **15, 16** remains closed;
- moving the magnetic key **11** away from the reference mark **12, 31** to open the contact between the magnetic strips **15, 16,**
on condition that the operating mode related to the series of operations carried out is activated or deactivated only if that series of operations is carried out within a predetermined maximum time interval.

In particular, a predetermined numerical code may associate to each operating mode a corresponding number indicating how many times the series of operations listed above must be carried out to activate or inhibit that thermostat operating mode.

According to another method, each operating mode can be associated with a different time interval during which the magnetic key **11** must remain close to the magnetic switch **10.**

A further method for modifying the thermostat operating mode may require the use of magnetic switching means **9** and therefore of the magnetic key **11,** in combination with the intervention of the operator on the regulating means **3** and then on the temperature regulating knob **3a** or on one of the buttons **3c** connected to the microprocessor **5.**

It is clear that also other methods for modifying the thermostat operating modes are possible, different from those described and depending above all on the characteristics of the electric circuit **4** and on the physical and programming characteristics of the microprocessor **5.**

From all that has been said it may therefore be understood that the thermostat of the invention achieves all the set aims.

In particular, the thermostat of the invention allows the operating modes to be modified using magnetic switching means instead of the mechanical means used in thermostats of the known type.

Advantageously, a thermostat is thus obtained that is simpler to construct than the known thermostats.

The aim to construct a more reliable thermostat is also achieved through the reduction of the mechanical elements to be operated.

Lastly, the use of magnetic switching means prevents the modification of the operating modes by unauthorised persons, by simply denying them access to the key.

## Claims

1. Method for modifying the operating mode of a thermostat (1; 30), said thermostat comprising:
- at least one electric circuit (4) with a microprocessor (5) suited to be connected to heating means of rooms and/or of heating devices;
- a case (2) containing said at least one electric circuit (4) and said microprocessor (5);
- regulating means (3) comprising magnetic switching means (9) for switching over the operating mode of said thermostat (1), said magnetic switching means comprising a magnetic switch (10) provided with at least one pair of magnetic strips (15; 16) housed inside a bulb (14), said strips (15; 16) being electrically connected to said microprocessor (5) and being suited to interact with a magnetic key (11) at the disposal of the operator;
- a reference mark (12; 31) situated outside of said case (2) in correspondence with said magnetic switch (10),
the method comprising the following series of operations to be performed by an operator :
a) placing said magnetic key (11) in contact with said reference mark (12; 31);
b) keeping said magnetic key (11) in contact with said reference mark (12; 31) for a predetermined time, sufficient to close the contact between said magnetic strips (15; 16) of said magnetic switch (10);
c) moving said magnetic key (11) away from said.case (2) to open the contact between said magnetic strips (15; 16),
the method being **characterised in that** a predetermined numerical code is associated with each operating mode and a corresponding number indicates how many times the said series of operations a) to c) must be carried out to activate or inhibit each particular operating mode.

2. Method according to claim 1), **characterised in that** each of said series of operations must be carried out within a predetermined maximum time interval in order to allow the next series of operations to be performed.

3. Method according to claim 2), **characterised in that** the time interval that passes between the operations included in each of said series of operations is variable.

4. Method according to claim 1), **characterised in that** the operator, at the same time as keeping said magnetic key (11) in contact with said reference mark (12; 31), operates said regulating means (3) at the disposal of the operator.

5. Method according to claim 1), **characterised in that** said reference mark consists of a concave portion (12) provided in said case (2) in correspondence with said bulb (14), said concave portion **(12)** being suited to house a shaped projection **(11b)** present in said magnetic key (11).

6. Method according to claim **1**), **characterised in that** said reference mark is constituted by an image (31) provided in said case (2) in correspondence with said bulb (14), said image (31) being suited to indicate the contact position of said shaped projection **(11 b)** of said magnetic key (11).

7. Method according to claim **6), characterised in that** said image (31) represents the drawing of a key (32).

8. Method according to claim **1**), **characterised in that** said magnetic key (11) is constituted by a body (11a) in which it is possible to observe a shaped projection (11 b) having a profile that can be mated with said reference mark (12; 31).

9. Method according to claim **8), characterised in that** the whole said body (11 a) of said magnetic key (11) is magnetic.

10. Method according to claim **9), characterised in that** only a part of said body (11 a) of said magnetic key (11) is magnetic.

## Patentansprüche

1. Verfahren zum Modifizieren des Betriebsmodus eines Thermostats (1; 30), wobei der Thermostat Folgendes umfasst:
- zumindest einen Stromkreis (4) mit einem Mikroprozessor (5), der dazu geeignet ist, mit Heizmitteln von Räumen und/oder von Heizvorrichtungen verbunden zu werden;
- ein Gehäuse (2), das den zumindest einen Stromkreis (4) und den Mikroprozessor (5) enthält;
- Regelungsmittel (3), die magnetische Umschaltmittel (9) zum Umschalten des Betriebsmodus des Thermostats (1) umfassen, wobei die magnetischen Umschaltmittel einen Magnetschalter (10) umfassen, der mit zumindest einem Paar aus Magnetstreifen (15; 16) ausgestattet ist, die in einer Röhre (14) untergebracht sind, wobei die Streifen (15; 16) mit dem Mikroprozessor (5) elektrisch verbunden sind und dazu geeignet sind, mit einem Magnetschlüssel (11) zu wechselwirken, der der Bedienungsperson zur Verfügung steht;
- eine Bezugsmarkierung (12; 31), die sich außen am Gehäuse (2) in Übereinstimmung mit dem Magnetschalter (10) befindet,
wobei das Verfahren die folgende Abfolge an Vorgängen umfasst, die von einer Bedienungsperson auszuführen sind:
a) das Anordnen des Magnetschlüssels (11) in Kontakt zur Bezugsmarkierung (12; 31);
b) das Halten des Magnetschlüssels (11) in Kontakt zur Bezugsmarkierung (12; 31) für einen vorbestimmten Zeitraum, der ausreichend ist, um den Kontakt zwischen den Magnetstreifen (15; 16) des Magnetschalters (10) zu schließen;
c) das Bewegen des Magnetschlüssels (11) weg vom Gehäuse (2), um den Kontakt zwischen den Magnetstreifen (15; 16) zu öffnen,
wobei das Verfahren **dadurch gekennzeichnet ist, dass** ein vorbestimmter numerischer Code jedem Betriebsmodus zugeordnet ist, und eine entsprechende Zahl gibt an, wie viele Male die Abfolge an Vorgängen a) bis c) ausgeführt werden muss, um jeden einzelnen Betriebsmodus zu aktivieren oder zu verhindern.

2. Verfahren nach Anspruch 1), **dadurch gekennzeichnet, dass** jede der Abfolgen an Vorgängen innerhalb eines vorbestimmten maximalen Zeitintervalls ausgeführt werden muss, um die Ausführung der nächsten Abfolge an Vorgängen zuzulassen.

3. Verfahren nach Anspruch 2), **dadurch gekennzeichnet, dass** das Zeitintervall, das zwischen den Vorgängen, die in jeder Abfolge an Vorgängen enthalten sind, vergeht, variabel ist.

4. Verfahren nach Anspruch 1), **dadurch gekennzeichnet, dass** die Bedienungsperson gleichzeitig mit dem Halten des Magnetschlüssels (11) in Kontakt zur Bezugsmarkierung (12; 31) das Regelungsmittel (3) bedient, das der Bedienungsperson zu Verfügung steht.

5. Verfahren nach Anspruch 1), **dadurch gekennzeichnet, dass** die Bezugsmarkierung aus einem konkaven Abschnitt (12) besteht, der im Gehäuse (2) in Übereinstimmung mit der Röhre (14) bereitgestellt ist, wobei der konkave Abschnitt (12) dazu geeignet ist, einen geformten Vorsprung (11 b) aufzunehmen, der im Magnetschlüssel (11) ausgebildet ist.

6. Verfahren nach Anspruch 1), **dadurch gekennzeichnet, dass** die Bezugsmarkierung durch ein Symbol (31) gebildet ist, das im Gehäuse (2) in Übereinstimmung mit der Röhre (14) bereitgestellt ist, wobei das Symbol (31) dazu geeignet ist, die Kontaktposition des geformten Vorsprungs (11 b) des Magnetschlüssels (11) anzugeben.

7. Verfahren nach Anspruch 6), **dadurch gekennzeichnet, dass** das Symbol (31) die Zeichnung eines Schlüssels (32) darstellt.

8. Verfahren nach Anspruch 1), **dadurch gekennzeichnet, dass** der Magnetschlüssel (11) durch einen Körper (11a) gebildet ist, bei dem ein geformter Vorsprung (11 b) zu erkennen ist, der ein Profil aufweist, das mit der Bezugsmarkierung (12; 31) zusammengepasst werden kann.

9. Verfahren nach Anspruch 8), **dadurch gekennzeichnet, dass** der gesamte Körper (11a) des Magnetschlüssels (11) magnetisch ist.

10. Verfahren nach Anspruch 9), **dadurch gekennzeichnet, dass** nur ein Teil des Körpers (11a) des Magnetschlüssels (11) magnetisch ist.

## Revendications

1. Méthode pour modifier le mode de fonctionnement d'un thermostat (1; 30), ledit thermostat comprenant:
- au moins un circuit électrique (4) avec un microprocesseur (5) indiqué pour être relié à des moyens chauffants de pièces et/ou de dispositifs chauffants;
- un boîtier (2) contenant ledit au moins un circuit électrique (4) et ledit microprocesseur (5);
- des moyens de réglage (3) comprenant des moyens magnétiques (9) aptes à commuter le mode de fonctionnement dudit thermostat (1), lesdits moyens magnétiques de commutation comprenant un interrupteur magnétique (10) doté d'au moins une paire de bandes magnétiques (15; 16) logées à l'intérieur d'un tube (14), lesdites bandes (15; 16) étant électriquement reliées audit microprocesseur (5) et étant indiquées pour intéragir avec une clé magnétique (11) à la disposition de l'utilisateur;
- un repère (12; 31) disposé à l'extérieur dudit boîtier (2) à hauteur dudit interrupteur magnétique (10),
la méthode comprenant les séries d'opérations suivantes qui doivent être exécutées par un opérateur:
a) mise en contact de ladite clé magnétique (11) avec ledit repère (12; 31);
b) maintient de ladite clé magnétique (11) en contact avec ledit repère (12; 31) pour un temps prédéterminé, suffisant pour interrompre le contact entre lesdites bandes magnétiques (15; 16) dudit interrupteur magnétique (10);
c) déplacement de ladite clé magnétique (11) dudit boîtier (2) pour ouvrir le contact entre lesdites bandes magnétiques (15; 16),
la méthode étant **caractérisée en ce qu'**un code numérique prédéterminé est associé avec chaque mode de fonctionnement et un numéro correspondant indique combien de fois lesdites séries d'opérations de a) à c) doivent être exécutées pour actionner ou arrêter chaque mode de fonctionnement particulier.

2. Méthode selon la revendication 1), **caractérisée en ce que** chacune desdites séries d'opérations doit être exécutée dans un intervalle maximum de temps prédéterminé de façon à consentir l'exécution des séries d'opérations suivantes.

3. Méthode selon la revendication 2), **caractérisée en ce que** l'intervalle de temps qui passe entre les opérations comprises en chacune desdites séries d'opérations est variable.

4. Méthode selon la revendication 1), **caractérisée en ce que** l'opérateur, en tant qu'il maintient ladite clé magnétique (11) en contact avec ledit repère (12; 31), actionne lesdits moyens de réglage (3) à la disposition de l'opérateur.

5. Méthode selon la revendication 1), **caractérisée en ce que** ledit repère consiste en une partie concave (12) prévue sur ledit boîtier (2) à hauteur dudit tube (14), ladite partie concave (12) étant indiquée pour loger une saillie galbée (11 b) se trouvant dans ladite clé magnétique (11).

6. Méthode selon la revendication 1), **caractérisée en ce que** ledit repère est constitué par une image (31) prévue sur ledit boîtier (2) à hauteur dudit tube (14), ladite image (31) étant apte à indiquer la position de contact de ladite saillie galbée (11 b) de ladite clé magnétique (11).

7. Méthode selon la revendication 6), **caractérisée en ce que** ladite image (31) représente le dessin d'une clé (32).

8. Méthode selon la revendication 1), **caractérisée en ce que** ladite clé magnétique (11) est constituée par un corps (11 a) dans lequel il est possible d'observer une saillie galbée (11b) ayant un profil qui peut être accouplé avec ledit repère (12; 31).

9. Méthode selon la revendication 8), **caractérisée en ce que** ledit corps entier (11a) de ladite clé magnétique (11) est magnétique.

10. Méthode selon la revendication 9), **caractérisée en ce que** seulement une partie dudit corps (11 a) de ladite clé magnétique (11) est magnétique.
